# EUROPÄISCHE PATENTSCHRIFT

(11) **EP 2 586 542 B1**
(45) Veröffentlichungstag und Bekanntmachung des Hinweises auf die Patenterteilung: **14.05.2014**
(21) Anmeldenummer: 12189969.4
(22) Anmeldetag: 25.10.2012
(51) Int. Cl.: B21D 39/04

(54) **Verfahren zum Fixieren eines Steckverbinders in einem Endbereich einer Leitung**
Process for the fixing of a connector into an end portion of a conduit
Procédé de fixation d'un connecteur à fiche dans l'extrémité d'un conduit

(30) Priorität: 28.10.2011 AT 15942011
(43) Veröffentlichungstag der Anmeldung: 01.05.2013
(73) Patentinhaber: Henn GmbH & Co.KG, 6850 Dornbirn (AT)
(72) Erfinder: Bachmann, Werner, 6971 Hard (AT); Hartmann, Harald, 6850 Dornbirn (AT)
(74) Vertreter: Burger, Hannes

(56) Entgegenhaltungen:
- EP-A1- 1 208 936
- EP-A1- 1 762 312
- DE-C1- 19 960 652
- US-A1- 2007 028 660

## Beschreibung

Die Erfindung betrifft ein Verfahren zum Fixieren eines Steckverbinders in einem Endbereich einer Leitung, insbesondere eines Rohres oder eines Schlauches, wobei das Verfahren die folgenden Schritte umfasst: Positionieren des Steckverbinders im Endbereich der Leitung; Positionieren einer Verpressvorrichtung im Inneren des Steckverbinders; und Fixieren des Steckverbinders im Endbereich der Leitung durch Ausführen eines Verpressvorgangs. Beim Verpressvorgang wird die Verpressvorrichtung mit einer vorgegebenen Verpresskraft von innen gegen den Steckverbinder oder die Leitung gepresst, sodass sich zumindest ein Teilbereich der Leitung und wahlweise auch des Steckverbinders verformt und eine Verpressung bildet. Solch ein Verfahren ist z.B. in der EP-A-1762312 offenbart.

Verpressverfahren zum Fixieren von Steckverbindern, d.h. von Steckern bzw. Steckvorrichtungen und Buchsen bzw. Aufnahmevorrichtungen, in den Endbereichen von Leitungen und die dazu notwendigen Verpressvorrichtungen sind prinzipiell bekannt. Zur Vorgabe der Verpresskraft während eines Verpressvorgangs wird üblicherweise eine kraftgesteuerte Verpresskraftregelung eingesetzt. Die erforderliche bzw. vorzugebende Verpresskraft wird pro Artikel, d.h. jeweils für eine Kombination eines bestimmten Typs eines Steckverbinders und eines bestimmten Typs einer Leitung, einmal fixiert.

Entscheidend für die Qualität, insbesondere für die Haltbarkeit und Dichtheit der Fixierung bzw. der Verpressung der Steckverbinder in den Endbereichen der Leitungen ist vor allem, dass die Leitungen immer auf möglichst den gleichen Verpressgrad verpresst werden. Der Verpressgrad ist ein relativer Wert (z.B. 50%) und sagt aus, welche Dicke bzw. Restwandstärke die Leitung im Bereich der Verpressung nach dem Verpressvorgang in Bezug auf die ursprüngliche Dicke bzw. Wandstärke der Leitung aufweist.

Nachteilig ist, dass bei den bisher bekannten Verpressverfahren aufgrund variierender Materialeigenschaften, unterschiedlicher Abmessungen und/oder Fertigungstoleranzen der Steckerbinder bzw. Leitungen eines Typs und damit des individuellen Aufbaus des einzelnen Steckverbinders bzw. der einzelnen Leitung der Verpressgrad der Leitungen bei einer fix vorgegebenen Verpresskraft zumindest geringfügig variiert. Insbesondere variiert der Verpressgrad bei den bekannten Verpressverfahren bei Leitungen mit unterschiedlichen Wandstärken. Ebenso ist es der Fall, dass bei den bisher bekannten Verpressverfahren aufgrund des individuellen Zustands des einzelnen Steckerbinders bzw. der einzelnen Leitung, beispielsweise ob und in welchem Ausmaß Schmiermittel, Kühlflüssigkeiten und/oder Späne auf der Oberfläche der Teile bzw. zwischen den Teilen vorhanden sind, der Verpressgrad der Leitung bei einer fix vorgegebenen Verpresskraft auch dadurch zumindest geringfügig variiert.

In der WO 2011/106805 A1 ist ein Verfahren zur Befestigung eines Leitungsverbinders, insbesondere eines Steckverbinders, mittels einer Befestigungsvorrichtung im Endbereich einer Leitung für flüssige und/oder gasförmige Medien beschrieben, bei dem in einem ersten Schritt der Steckverbinder im Endbereich der Leitung positioniert wird. Anschließend wird ein Teil der Befestigungsvorrichtung im Inneren des Steckverbinders positioniert und ein Verpressvorgang ausgeführt, wobei der im Inneren des Steckverbinders positionierte Teil der Befestigungsvorrichtung mit einer vorgegebenen Verpresskraft von innen gegen den Steckverbinder gepresst wird. Dadurch wird ein Teilbereich des Steckverbinders und der darunterliegenden Leitung verformt und es wird eine Verpressung gebildet, wodurch Steckverbinder und Leitung abdichtend miteinander verbunden sind. Beim abschließenden Entfernen des Teils der Befestigungsvorrichtung, mit welchem der Verpressvorgang ausgeführt wurde, aus dem Inneren des verpressten Steckverbinders wird ein am Steckverbinder befestigter Sperrkörper entfernt, sodass ab nun ein Verbinden des Steckverbinders mit einem Gegenverbinder möglich ist. Ebenso wird in der WO 2011/106805 A1 ein Leitungsverbinder bzw. Steckverbinder und eine Befestigungsvorrichtung zur Durchführung des eingangs beschriebenen Verfahrens genannt. Eine Anpassung bzw. Veränderung der Verpresskraft beim Verpressen von Leitungsverbindern und Leitungen mittels der Befestigungsvorrichtung ist in dem Verfahren nicht vorgesehen oder angedacht.

Die EP 0 371 912 A1 beschreibt eine Vorrichtung zur Überwachung und Regelung der Anpresskraft einer Tachowalze an eine Spulenpackung. Dazu sind im Bereich der Enden der Tachowalze wegarme Kraftmesssensoren vorgesehen. Die so gewonnenen Messwerte können laut der EP 0 371 912 A1 auch zur Aufrechterhaltung der Parallelität der Drehachsen der Spulenpackung und der Tachowalze herangezogen werden. Messungen von Anpresskräften zur Regelung eines Verpressvorgangs von Steckverbindern und Leitungen werden in der EP 0 371 912 A1 in keiner Weise behandelt.

In der DE 10 2004 016 597 A1 ist ein Verfahren zur Montage eines Schlauches an einem zweiteiligen Steckteil umfassend eine Außen- und eine Innenhülse gezeigt, bei welchem Verfahren eine Stirnseite des Schlauchs in einen Aufnahmeraum zwischen der Außen- und der Innenhülse eingeschoben wird und mittels eines in der Innenhülse positionierten Spreizwerkzeugs ein radial nach außen gerichteter Presswulst in der Innenhülse erzeugt wird, wodurch der Schlauch im Aufnahmeraum zwischen Außen- und Innenhülse abdichtend festgeklemmt wird. Zur verbesserten Fixierung des Schlauchs im Aufnahmeraum ist die Außenhülse mindestens im radial gegenüberliegenden Bereich zum Presswulst als Ringfeder ausgebildet, sodass die Außenhülse nach dem Verpressen radial einwärts gerichtet eine Vorspannung auf den Schlauch ausübt. Weiters beschreibt die DE 10 2004 016 597 A1 eine Steckverbindung umfassend einen zweiteiligen Steckteil, welcher gemäß dem eingangs genannten Verfahren mit einem Schlauch abdichtend verbunden wird, und einen in den zweiteiligen Steckteil einsteckbaren Stutzen. Mit welcher Kraft das Spreizwerkzeug die Verpressung des zweiteiligen Steckteils mit dem Schlauch vornimmt, wird in diesem Dokument nicht angesprochen.

Die DE 36 07 647 A1 beschreibt ein Kaschierverfahren und eine Vorrichtung zur Durchführung des Verfahrens, wobei ein Kaschierwerkstoff bereits vor dem eigentlichen Kaschieren eines Formteils in eine Form gebracht wird, die der Oberflächenform des Formteils im zu kaschierenden Bereich möglichst entspricht. Der bereits vorgeformte und in dieser Form fixierte Kaschierwerkstoff kann dann laut der DE 36 07 647 A1 mit verminderter Eigenspannung und verbesserten Reibungsbedingungen beim eigentlichen Kaschiervorgang der Geometrie des zu kaschierenden Formteils vollständig angepasst und aufkaschiert werden. Zur Halterung des Kaschierwerkstoffs in der vorgesehenen Verarbeitungsposition am Kaschierwerkzeug ist ein Spannrahmen vorgesehen, der eine regelbare Niederhaltekraft auf den Kaschierwerkstoff ausübt und diesen dadurch während der Verarbeitung am bzw. im Kaschierwerkzeug fixiert. Eine Regelung von Anpresskräften für andere Zwecke ist in der DE 36 07 647 A1 nicht beschrieben.

Der vorliegenden Erfindung liegt daher die Aufgabe zugrunde, ein Verfahren zum Fixieren eines Steckverbinders in einem Endbereich einer Leitung zu schaffen, welches für eine Kombination eines bestimmten Typs eines Steckverbinders und eines bestimmten Typs einer Leitung bei jedem Verpressvorgang einen möglichst gleichen Verpressgrad der Leitung erreicht. Die Aufgabe der Erfindung wird mit einem Verfahren der eingangs genannten Art dadurch gelöst, dass vor dem Ausführen des Verpressvorgangs die Chargen, aus denen ein nun zu verpressender Steckverbinder und eine nun zu verpressende Leitung stammen, ermittelt werden und bei der Verarbeitung eines Steckverbinders und/oder einer Leitung aus einer anderen Charge als der zuvor verarbeiteten Charge ein Kraftverlauf für das Verpressen des Steckverbinders aus der vorherigen Charge mit einem Kraftverlauf für das Verpressen des Steckverbinders aus der nun zu verpressenden, anderen Charge verglichen wird und/oder ein Kraftverlauf für das Verpressen der Leitung aus der vorherigen Charge mit einem Kraftverlauf für das Verpressen der Leitung aus der nun zu verpressenden, anderen Charge verglichen wird und die zuvor vorgegebene Verpresskraft mittels zumindest eines Korrekturwerts an die nun vorzugebende Verpresskraft angepasst wird, wobei ein Korrekturwert aus einer Differenz in den Kraftverläufen der Steckverbinder aus den unterschiedlichen Chargen ermittelt wird und ein weiterer Korrekturwert aus einer Differenz in den Kraftverläufen der Leitungen aus den unterschiedlichen Chargen ermittelt wird.

Auf diese Weise wird eine möglichst optimale Haltbarkeit und Dichtheit der Verbindung zwischen dem Steckverbinder und der Leitung erreicht, welche Verbindung durch die Verformung bzw. Verpressung in zumindest einem Teilbereich der Leitung und wahlweise auch in zumindest einem Teilbereich des Steckverbinders gebildet wird. Der dazu notwendige gleichbleibende Verpressgrad der Leitungen wird auch nicht durch wechselnde Materialeigenschaften, unterschiedliche Abmessungen und die Fertigungstoleranzen der Steckerbinder bzw. Leitungen und/oder durch wechselnde Zustände der Steckerbinder bzw. Leitungen bei der Verarbeitung beeinflusst. Der Grund dafür ist, dass solche Variationen innerhalb eines Typs von Steckverbindern bzw. Leitungen zwar vorhanden sind, da nicht versucht wird, sie vorab zu beseitigen oder sie von vornherein auszuschließen, die Auswirkungen dieser Variationen auf den Verpressgrad aber aufgrund der je nach Aufbau und/oder Zustand des gerade verarbeiteten Steckverbinders und/oder der gerade verarbeiteten Leitung unterschiedlich vorgegebenen Verpresskraft minimal sind.

Vorteilhafte Ausgestaltungen und Weiterbildungen der Erfindung ergeben sich aus den Unteransprüchen sowie aus der Beschreibung in Zusammenschau mit den Figuren.

Besonders vorteilhaft ist es, wenn bei der Verarbeitung eines Steckverbinders und/oder einer Leitung aus einer anderen Charge als der gerade zuvor vorliegenden die vorgegebene Verpresskraft entsprechend dem festgelegten Verpressgrad angepasst wird.

Unter einer Charge bzw. Chargeneinheit wird in diesem Zusammenhang die Gesamtheit sämtlicher Einheiten von Steckverbindern oder Leitungen verstanden, die unter den gleichen Bedingungen bzw. in einem ununterbrochenen Produktionsdurchgang erzeugt wurden. Eine Charge wechselt also insbesondere dann, wenn es eine Veränderung im Fertigungs- bzw. Herstellungsprozess gibt, wie beispielsweise einen Materialwechsel, eine Änderung von zumindest einem Prozessparameter und/oder eine Veränderung an der Produktionsvorrichtung aufgrund eines Defekts oder Werkzeugbruchs. Innerhalb einer Charge sind der Aufbau (Materialeigenschaften, Abmessungen, Fertigungstoleranzen etc.) und/oder der Zustand (Rückstände bzw. Verunreinigungen auf der Oberfläche etc.) der einzelnen Steckverbinder oder Leitungen weitgehend gleich.

Somit ist ein möglichst gleichbleibender Verpressgrad der Leitungen insbesondere bei einem Chargenwechsel der Steckverbinder und/oder der Leitungen sichergestellt, da sich erfahrungsgemäß vor allem bei einem Chargenwechsel der Aufbau und/oder der Zustand der Steckverbinder oder der Leitungen relativ stark ändern können. Gleichzeitig wird die Häufigkeit der Ermittlung bzw. Festlegung der vorgegebenen Verpresskraft reduziert. Damit ist ein guter Kompromiss zwischen der Sicherstellung eines möglichst konstanten Verpressgrads und des Aufwands für die nötigen Ermittlungs- bzw. Einstelltätigkeiten in Bezug auf die Verpresskraft gegeben.

Sehr günstig ist es, wenn bei einer neuen, noch nicht verarbeiteten Chargenkonstellation eines Steckverbinders aus einer bestimmten Charge und einer Leitung aus einer bestimmten Charge die für den festgelegten Verpressgrad vorzugebende Verpresskraft in einem initialen Verpressvorgang ermittelt und für diese Chargenkonstellation hinterlegt und verwendet wird.

Unter einer Chargenkonstellation wird in diesem Zusammenhang eine Kombination eines Steckverbinders aus einer bestimmten Charge und einer Leitung aus einer bestimmten Charge verstanden. Wird zumindest ein Steckverbinder oder zumindest eine Leitung aus einer anderen bzw. neuen Charge verarbeitet, so liegt eine andere bzw. neue Chargenkonstellation vor. Durch die Ermittlung der für den festgelegten Verpressgrad vorzugebende Verpresskraft in einem initialen Verpressvorgang, bei welchem der Steckverbinder im Endbereich der Leitung positioniert ist, ist eine möglichst genaue und zuverlässige Vorgabe der korrekten Verpresskraft sichergestellt. Ebenso werden dadurch auch mögliche Veränderungen im Zustand der Steckverbinder oder der Leitungen vor oder während der Verarbeitung in der Verpressvorrichtung, beispielsweise durch die Verwendung eines Schmiermittels beim Positionieren des Steckverbinders im Endbereich der Leitung (Fügen), für die Ermittlung der Verpresskraft für die neue Chargenkonstellation berücksichtigt. Weiters sind fehlerhafte Verpressvorgänge aufgrund falscher Informationen zu Aufbau und/oder Zustand der Steckverbinder bzw. Leitungen in den jeweiligen Chargen oder zu den vorzugebenden Verpresskräften für die Steckverbinder bzw. Leitungen in den jeweiligen Chargen ausgeschlossen, da die jeweilige Verpresskraft vor Ort durch den initialen Verpressvorgang ermittelt wird.

Sehr günstig ist es auch, wenn bei der Verarbeitung eines Steckverbinders und/oder einer Leitung aus einer neuen, noch nicht verarbeiteten Charge ein separater initialer Verpressvorgang nur für einen Steckverbinder aus der neuen Charge alleine und/oder nur für eine Leitung aus der neuen Charge alleine durchgeführt wird. Aus den dabei gewonnenen Ergebnissen betreffend den Verpressgrad bzw. die Kraftverläufe in dem Steckverbinder und/oder in der Leitung werden die für den festgelegten Verpressgrad vorzugebende Verpresskraft ermittelt und für die jeweilige Charge von Steckverbindern und/oder Leitungen hinterlegt und verwendet. Dadurch wird die Anzahl der initialen Verpressvorgänge im Vergleich zu der vorher beschriebenen Vorgangsweise, bei der für jede neue Chargenkonstellation ein solcher initialer Verpressvorgang durchgeführt wird, reduziert. In weiterer Folge wird der mit den initialen Verpressvorgängen verbundene Material- und Zeitaufwand reduziert. Beispielsweise sind bei drei Steckverbinder-Chargen und bei drei Leitungs-Chargen bei der nun beschriebenen Vorgangsweise insgesamt sechs initiale Verpressvorgänge nötig und bei der zuvor beschriebenen Vorgangsweise neun Chargenkonstellationen möglich und damit neun initiale Verpressvorgänge nötig.

Vorteilhaft ist es auch, wenn für die vorgegebene Verpresskraft ein minimaler Wert und ein maximaler Wert festgelegt werden und eine Charge von Steckverbindern und/oder eine Charge von Leitungen ausgesondert wird, wenn die vorzugebende Verpresskraft, welche in zumindest einem initialen Verpressvorgang für diese Chargenkonstellation bzw. Charge ermittelt wurde, außerhalb dieses Bereichs liegt. Auf diese Weise werden fehlerhafte Teile bzw. Chargen noch vor der Verarbeitung in der Verpressvorrichtung ausgeschieden.

Günstig ist es, wenn gemäß einer anderen Ausführungsform des Verfahrens bei der Verarbeitung eines Steckverbinders und/oder einer Leitung aus einer neuen Charge oder bei einer neuen Chargenkonstellation eines Steckverbinders aus einer bestimmten Charge und einer Leitung aus einer bestimmten Charge die für den festgelegten Verpressgrad vorzugebende Verpresskraft aus einem Datensatz des Herstellers oder Lieferanten des Steckverbinders und/oder der Leitung ermittelt wird und für die jeweilige Charge von Steckverbindern und/oder Leitungen oder für die jeweilige Chargenkonstellation hinterlegt und verwendet wird. Durch diese Vorgangsweise sind bei der Herstellung der Verpressung keine initialen Verpressvorgänge nötig und es fällt kein zusätzlicher Zeit-, Material- und Auswertungsaufwand für solche Vorgänge an.

Günstig ist es, wenn bei einer Änderung im Verarbeitungsprozess der Verpressvorrichtung die vorgegebene Verpresskraft entsprechend dem festgelegten Verpressgrad angepasst wird. Eine Änderung im Verarbeitungsprozess ist insbesondere dann möglich, wenn eine Wartung bzw. Erneuerung der Verpressvorrichtung vorgenommen wurde oder wenn eine Optimierung bzw. Umstellung des Verpressvorgangs erfolgt ist. Die Anpassung der Verpresskraft erfolgt dabei gemäß einem hinterlegten oder neu ermittelten Wert. Auf diese Weise ist sichergestellt, dass ein möglichst gleichbleibender Verpressgrad auch bei Änderungen an der Verpressvorrichtung, beispielsweise bei einem Eingriff in die kraftgesteuerte Verpresskraftregelung, sichergestellt ist.

Günstig ist es auch, wenn bei einem Chargenwechsel des Steckverbinders und/oder der Leitung die zuvor vorgegebene Verpresskraft mittels zumindest eines Korrekturwertes an die nun vorzugebende Verpresskraft angepasst wird, sodass eine Abweichung beim Verpressgrad möglichst gut kompensiert wird. Der für jede Charge von Steckverbindern und Leitungen hinterlegte oder neu ermittelte, individuelle Korrekturwert ermöglicht somit eine sehr einfache Anpassung der zuvor vorgegebenen Verpresskraft an die nun vorzugebende Verpresskraft, insbesondere wenn der Chargenwechsel für den Steckverbinder und die Leitung zugleich erfolgt. In einem solchen Fall sind die beiden Korrekturwerte für die Verpresskraft für den nun zu verarbeitenden Steckverbinder und die nun zu verarbeitende Leitung einfach zu addieren. Vorteilhaft ist es in diesem Zusammenhang auch, die Korrekturwerte für die Steckverbinder und die Leitungen jeweils bezogen auf eine Normal- bzw. Nennverpresskraft anzugeben.

Vorteilhaft ist es ebenso, wenn jeder Steckverbinder und/oder jede Leitung mit einem Code ausgestattet ist, anhand dessen vor dem Verpressen eine eindeutige Chargennummer des jeweiligen Steckverbinders bzw. der jeweiligen Leitung ermittelt wird und die vorgegebene Verpresskraft entsprechend der vorliegenden Chargenkonstellation und entsprechend dem festgelegten Verpressgrad angepasst wird. Die Anpassung der Verpresskraft erfolgt dabei gemäß einem hinterlegten oder einem neu ermittelten Wert. Auf diese Weise werden die Möglichkeiten einer falschen Einstellung der vorgegebenen Verpresskraft reduziert, da durch die individuelle Kennzeichnung der einzelnen Steckverbinder bzw. Leitungen beispielsweise auch ein Vermischen von Steckverbindern oder Leitungen aus unterschiedlichen Chargen in einem Behälter kein Problem mehr darstellt.

Besonders vorteilhaft ist es dabei, wenn der die Chargennummer enthaltende Code maschinenlesbar abgespeichert ist, insbesondere in Form eines optisch auswertbaren, ein- oder zweidimensionalen Strichcodes oder eines elektromagnetisch abfragbaren Transponders, da dadurch die vorliegende Chargenkonstellation zur Anpassung der vorgegebenen Verpresskraft automatisch ermittelt werden kann. Dies ermöglicht eine Steigerung der Effizienz des Verpressverfahrens, da ein Chargenwechsel automatisch erkannt und die vorgegebene Verpresskraft entsprechend angepasst wird.

Vorteilhaft ist es schließlich, wenn die jeweilige vorgegebene Verpresskraft in Form eines bestimmten konstanten Kraftwerts oder in Form eines Kraftverlaufs über der Zeit oder über dem Weg vorgegeben wird. Bei einer Vorgabe in Form eines bestimmten konstanten Kraftwerts ist eine sehr einfache und kostengünstige kraftgesteuerte Verpresskraftregelung einsetzbar. Bei einer Vorgabe in Form eines Kraftverlaufs über der Zeit oder über dem Weg, d.h. bei einem Einsatz einer Kraft-Zeit-Regelung oder einer Kraft-Weg-Regelung für die Verpresskraft, sind die optimalsten Ergebnisse bezüglich eines möglichst gleichmäßigen bzw. möglichst gleichbleibenden Verpressgrads erzielbar.

Zum besseren Verständnis der Erfindung wird diese anhand der nachfolgenden Figuren näher erläutert.

Es zeigen jeweils in stark vereinfachter, schematischer Darstellung:
- Fig. 1: eine Schnittdarstellung eines Steckverbinders in einem Endbereich einer Leitung und eine Verpressvorrichtung bei der Durchführung des Verpressverfahrens;
- Fig. 2: eine Ablaufdarstellung des grundsätzlichen Verpressverfahrens;
- Fig. 3: eine Ablaufdarstellung einer möglichen Ausführungsform eines Verfahrensschrittes des Verpressverfahrens nach Fig. 2, in welchem Verfahrensschritt die Verpresskraft für den Verpressvorgang vorgegeben wird;
- Fig. 4: eine Ablaufdarstellung einer weiteren möglichen Ausführungsform des Verfahrensschrittes des Verpressverfahrens nach Fig. 2, in welchem Verfahrensschritt die Verpresskraft für den Verpressvorgang vorgegeben wird;
- Fig. 5: eine Ablaufdarstellung einer dritten möglichen Ausführungsform des Verfahrensschrittes des Verpressverfahrens nach Fig. 2, in welchem Verfahrensschritt die Verpresskraft für den Verpressvorgang vorgegeben wird und
- Fig. 6: eine Darstellung der Kraftverläufe in einem Steckverbinder aus einer Charge und in Leitungen aus unterschiedlichen Chargen bei initialen Verpressvorgängen und die daraus abgeleiteten Korrekturwerte für die in den jeweiligen Verpressvorgängen vorzugebende Verpresskraft.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

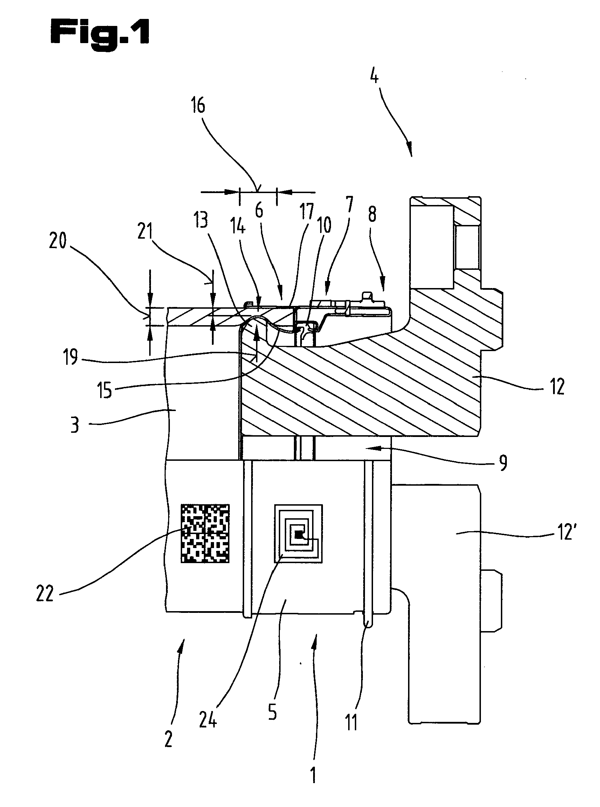

Fig. 1 zeigt beispielhaft eine Schnittdarstellung eines Steckverbinders 1 in einem Endbereich 2 einer Leitung 3 und eine Verpressvorrichtung 4 bei der Durchführung eines Fixier- bzw. Verpressverfahrens.

Im dargestellten Ausführungsbeispiel ist die Leitung 3 als Schlauch ausgeführt, der vorzugsweise aus einem Elastomer oder einem sonstigen Kunststoff oder auch aus einem Metall hergestellt ist. Die hohlzylindrische Ausführung des Schlauches bzw. der Leitung 3 ist besonders vorteilhaft im Hinblick auf die Bestückung des Endbereichs 2 der Leitung 3 mit dem Steckverbinder 1 und im Hinblick auf die Durchführung des Verpressverfahrens. Es sind aber auch Leitungen 3 mit elliptischen bzw. ovalen oder rechteckigen Querschnittsbegrenzungen möglich.

Der Steckverbinder 1 ist im vorliegenden Ausführungsbeispiel als eine Aufnahmevorrichtung bzw. Buchse ausgebildet, in welche Aufnahmevorrichtung eine Steckvorrichtung bzw. ein Stecker eingeführt werden kann und dort vorzugsweise mit einer Rastfeder 11 arretierbar ist. Die Aufnahmevorrichtung bzw. der Steckverbinder 1 im vorliegenden Beispiel umfasst eine Aufnahmehülse 5 aus Metall mit einem zweilagigen Aufnahmeabschnitt 6 für die Leitung 3, einen Mittelabschnitt 7 und einen Spitzenabschnitt 8, welcher das vordere Ende der Aufnahmehülse darstellt. Im Inneren 9 des Steckverbinders 1 ist im Bereich des Mittelabschnitts 7 der Aufnahmehülse 5 ein Dichtungselement 10 aus einem Elastomer angeordnet. Natürlich ist es mittels des Verpressverfahrens ebenso möglich, die Steckvorrichtung bzw. den Stecker im Endbereich 2 der Leitung 3 mittels eines Verpressvorgangs zu fixieren.

Zur Aufbringung der Kraft für einen Verpressvorgangs ist die Verpressvorrichtung 4 mit Spreizbacken 12, 12' ausgestattet. Die Verpressvorrichtung 4 im vorliegenden Ausführungsbeispiel umfasst acht entlang eines Kreisumfangs regelmäßig angeordnete Spreizbacken 12, 12'. In Fig. 1 sind aus Gründen der Übersichtlichkeit nur zwei der acht Spreizbacken 12, 12' dargestellt. Während eines Verpressvorgangs werden die Spreizbacken 12, 12' der Verpressvorrichtung 4 gleichzeitig und gleichmäßig, vorzugsweise mittels eines nicht dargestellten hydraulischen Antriebsmittels, radial nach außen gepresst, sodass ihre Pressabschnitte 13 eine Verpressung 14 der Leitung 3 und wahlweise auch des Steckverbinders 1 in seinem Aufnahmeabschnitt 6 bewirken.

Wird, wie in Fig. 1 gezeigt, eine Innenlage 15 des zweilagigen Aufnahmeabschnitts 6 des Steckverbinders 1 bei einem Verpressvorgang mit den Spreizbacken 12, 12' verpresst, so ist zumindest der Teilbereich des Steckverbinders 1 bzw. der Innenlage 15 aus einem Metall ausgeführt, der sich bei diesem Vorgang verformt, sodass eine stabile und haltbare Verpressung 14 hergestellt ist. Wird gemäß einer nicht dargestellten Ausführungsform des Verpressverfahrens nur die Leitung 3 mit den Spreizbacken 12, 12' verformt, so ist zumindest ein Teilbereich 16 der Leitung 3, welcher Teilbereich 16 bei diesem Vorgang verpresst wird, aus einem Metall ausgeführt, sodass auch in diesem Fall die nötige Stabilität und Haltbarkeit der Verpressung 14 erreicht wird. Eine Außenlage 17 des Aufnahmeaufschnitts 6 des Steckverbinders 1 wird bei dem Verpressvorgang grundsätzlich nicht verformt.

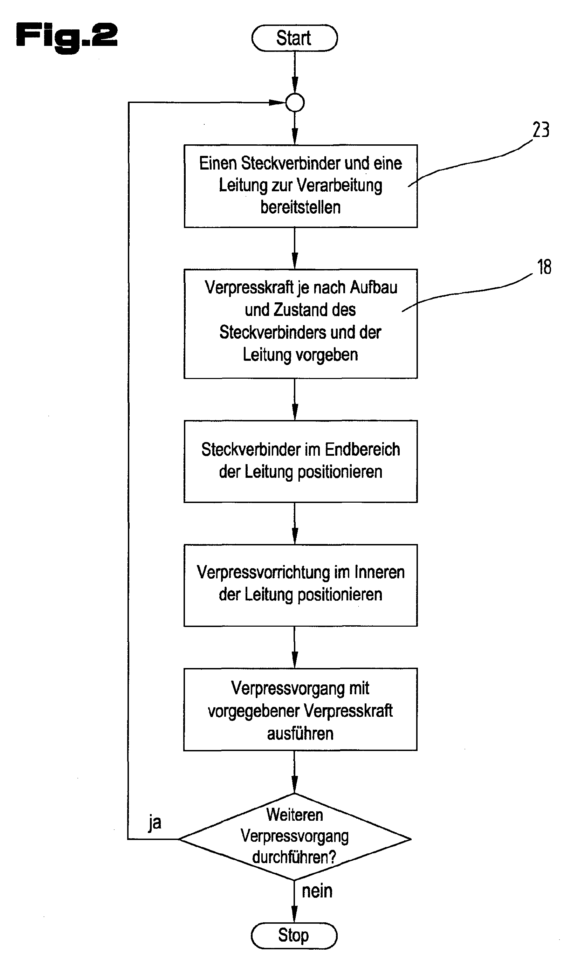

In Fig. 2 sind die grundlegenden Verfahrensschritte des Verpressverfahrens, welches mit der Verpressvorrichtung gemäß Fig. 1 ausführbar ist, in einem Ablaufdiagramm dargestellt. Nach dem Start des Verpressverfahrens zum Fixieren des Steckverbinders 1 im Endbereich 2 der Leitung 3 wird in einem Verfahrensschritt 23 ein Steckverbinder 1 und eine Leitung 3 zur Verarbeitung bereitgestellt bzw. ausgewählt. In einem wesentlichen, weiteren Verfahrensschritt 18 wird eine Verpresskraft 19 je nach Aufbau und/oder Zustand des Steckverbinders 1 und der Leitung 3 individuell vorgegeben bzw. festgelegt, sodass in jedem und insbesondere im gerade durchgeführten Verpressvorgang möglichst der gleiche Verpressgrad der Leitung 3 erreicht wird. Die Verpresskraft 19 bezeichnet jene Kraft, mit welcher die Spreizbacken 12, 12' der Verpressvorrichtung 4 bei einem Verpressvorgang von innen gegen die Leitung 3 und, wie im vorliegenden Ausführungsbeispiel ausgeführt, auch gegen die Innenlage 15 des Aufnahmeabschnitts 6 des Steckverbinders 1 gepresst werden, sodass eine Verformung der Leitung 3 und in diesem Fall auch des Steckverbinders 1 erreicht wird und eine dichte und dauerhafte Verbindung bzw. Verpressung 14 zwischen dem Steckverbinder 1 und der Leitung 3 gegeben ist.

Die Bestimmung der momentan ausgeübten Verpresskraft 19 (Ist-Verpresskraft) für die Regelung ist direkt oder indirekt möglich. Eine direkte Bestimmung ist beispielsweise durch zumindest einen Kraftmesssensor in den Spreizbacken 12, 12' der Verpressvorrichtung 4 durchführbar. Auf indirektem Weg wird die Verpresskraft 19 beispielsweise über eine axiale Antriebskraft in der Verpressvorrichtung 4 bestimmt, welche axiale Antriebskraft in eine radial nach außen gerichtete Bewegung der Spreizbacken 12, 12' umgesetzt wird. Die dabei ermittelte axiale Antriebskraft muss also auf die eigentliche Verpresskraft 19 umgerechnet werden. Ein Vorteil der direkten Bestimmung der Verpresskraft 19 ist die dadurch erreichbare höhere Genauigkeit. Bei der indirekten Bestimmung ergeben sich unter anderem Kostenvorteile bei der Herstellung und dem Austausch der Werkzeuge bzw. Spreizbacken 12, 12' der Verpressvorrichtung 4, da dies unabhängig von etwaigen Kraftmesssensoren möglich ist.

In weiteren Verfahrensschritten gemäß Fig. 2 wird der Steckverbinder 1 im Endbereich 2 der Leitung 3 und die Verpressvorrichtung 4 im Inneren 9 des Steckverbinders 1 positioniert. Konkret werden im letzten beschriebenen Verfahrensschritt die Spreizbacken 12, 12' der Verpressvorrichtung 4 im Inneren 9 des Steckverbinders 1 positioniert, wobei diese Positionierung durch Bewegen der Verpressvorrichtung 4 bzw. der Spreizbacken 12, 12' und/oder durch Bewegen des Steckverbinders 1 und der Leitung 3 erreicht wird. Nach dem erfolgreichen Abschluss der Positioniervorgänge wird der Steckverbinder 1 im Endbereich 2 der Leitung 3 durch Ausführen eines Verpressvorgangs fixiert, wobei die Spreizbacken 12, 12' der Verpressvorrichtung 4 mit der zuvor im Verfahrensschritt 18 festgelegten, individuellen Verpresskraft 19 von innen direkt gegen den Steckverbinder 1 und indirekt gegen die Leitung 3 gepresst wird. Dadurch verformt sich zumindest der Teilbereich 16 der Leitung 3 und im vorliegenden Ausführungsbeispiel gemäß Fig. 1 auch ein Teilbereich des Steckverbinders 1 und es bildet sich eine Verpressung 14 des Aufnahmeabschnitts 6 des Steckverbinders 1 und der Leitung 3.

Soll ein weiterer Verpressvorgang durchgeführt werden, so wird ein neuer Steckverbinder 1 und eine neue Leitung 3 zur Verarbeitung bereitgestellt und die weiteren Verfahrensschritte des zuvor beschriebenen Verpressverfahrens werden durchgeführt. Wird kein weiterer Verpressvorgang durchgeführt, so endet das Verpressverfahren an dieser Stelle.

Vor der Durchführung eines Verpressvorgangs weist die Leitung 3 eine Wandstärke 20 auf. Durch die Verformung aufgrund des Verpressvorgangs reduziert sich diese Wandstärke 20 im Bereich der Verpressung 14 auf eine Verpressdicke 21. Das Verhältnis der Verpressdicke 21 und der Wandstärke 20 in Prozent ergibt den Verpressgrad der Leitung 3. Dieser Verpressgrad soll für eine hohe Qualität der Verpressung 14 nach jedem Verpressvorgang möglichst gleich sein.

Besonders zweckmäßig ist es, wenn die in einem Verpressvorgang jeweils vorgegebene Verpresskraft 19 in Form eines bestimmten Kraftwerts oder in Form eines Kraftverlaufs über der Zeit oder über dem Weg vorgegeben wird.

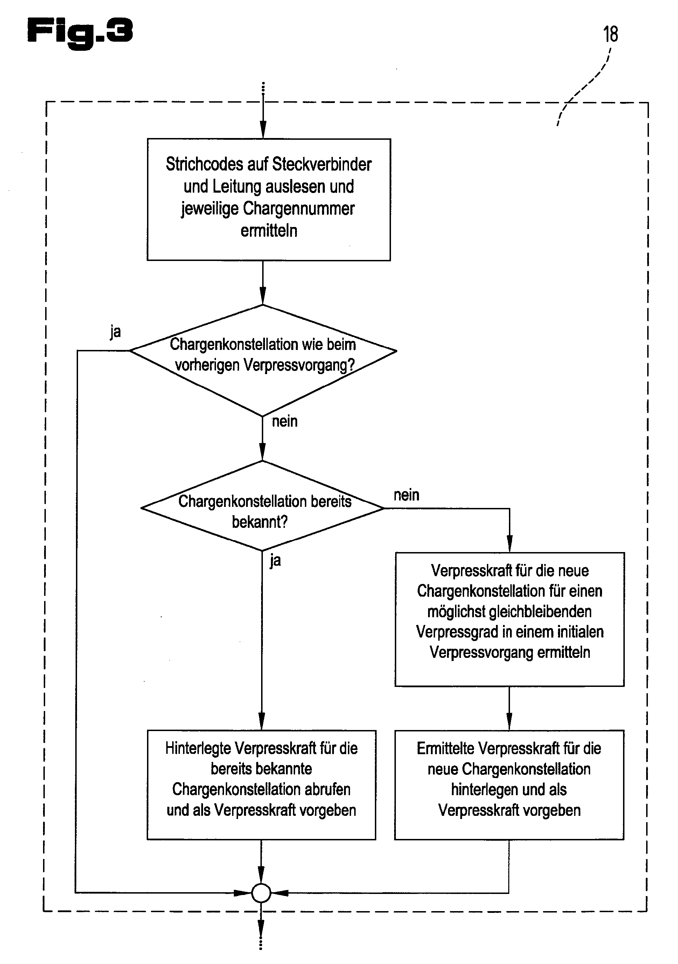

In Fig. 3 ist eine mögliche Ausführungsform des Verfahrensschritts 18 des Verpressverfahrens nach Fig. 2 in einem Ablaufdiagramm dargestellt, in welchem Verfahrensschritt 18 die Verpresskraft 19 für den Verpressvorgang vorgegeben wird.

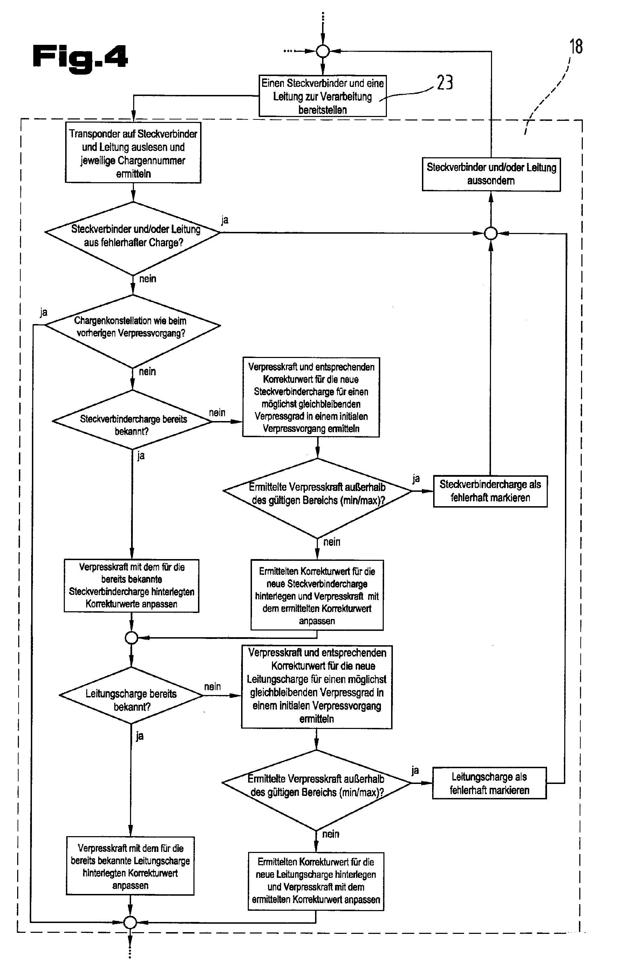

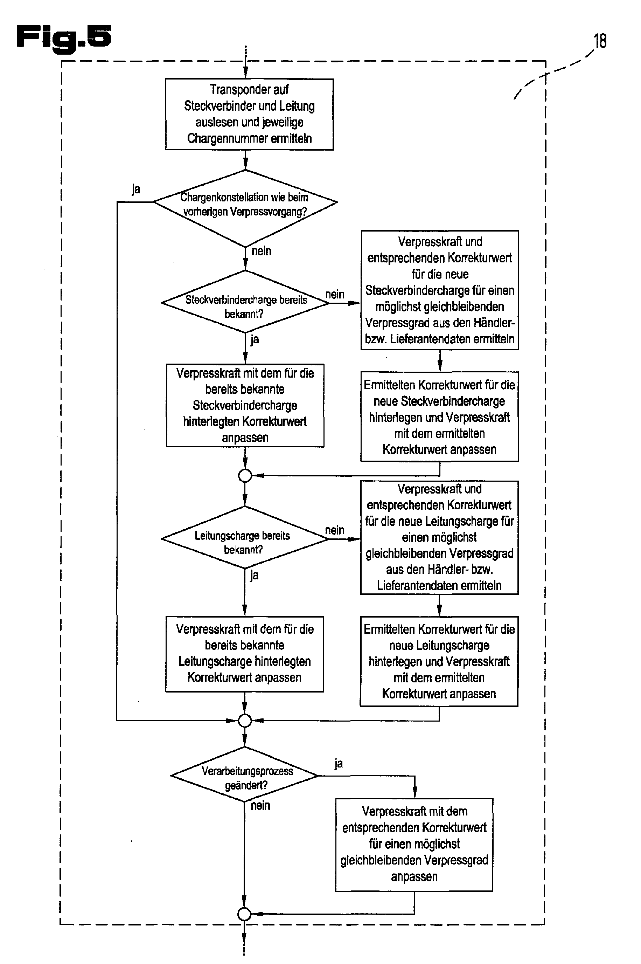

Bei einer solchen Ausführung des Verfahrensschrittes 18 wie auch bei den weiteren möglichen Ausgestaltungen des Verfahrensschrittes 18 gemäß der Fig. 4 und 5 wird bei der Verarbeitung eines Steckverbinders 1 aus einer anderen, im vorherigen Verpressvorgang nicht verarbeiteten Charge und/oder einer Leitung 3 aus einer anderen, im vorherigen Verpressvorgang nicht verarbeiteten Charge die zuvor vorgegebene Verpresskraft 19 entsprechend dem festgelegten Verpressgrad angepasst, sodass in jedem Verpressvorgang möglichst der gleiche Verpressgrad der Leitung 3 erreicht wird.

Zu diesem Zweck wird im Verfahrensschritt 18 gemäß Fig. 3 zuerst jeweils ein Strichcode 22 - siehe Fig. 1 - auf dem Steckverbinder 1 und der Leitung 3, der im dargestellten Beispiel als ein zweidimensionaler Strichcode 22 (Datamatrix) ausgeführt ist, optisch ausgewertet und eine jeweilige Chargennummer des Steckverbinders 1 und der Leitung 3 ermittelt. Aufgrund dieser Information kann in einem nächsten Schritt festgestellt werden, ob sich die nun gegebene Chargenkonstellation gegenüber der Chargenkonstellation beim vorherigen Verpressvorgang geändert hat. Ist dies nicht der Fall, so muss die Verpresskraft nicht geändert werden und die zuvor vorgegebene Verpresskraft kann beibehalten werden. In diesem Fall ist der Verfahrensschritt 18 an dieser Stelle abgeschlossen. Bei der Durchführung des ersten Verpressvorgangs ist die Chargenkonstellation immer als zur vorherigen Chargenkonstellation geändert zu betrachten.

Wird stattdessen eine Änderung der Chargenkonstellation festgestellt, so wird in einem nächsten Schritt ermittelt, ob die aktuell gegebene Chargenkonstellation bereits bekannt ist bzw. ob eine solche Kombination eines Steckverbinders 1 aus einer bestimmten Charge und einer Leitung 3 aus einer bestimmten Charge bereits verarbeitet wurde. Ist dies nicht der Fall, so wird die vorzugebende Verpresskraft 19 für die neue, unbekannte Chargenkonstellation in einem initialen Verpressvorgang ermittelt, sodass möglichst der gleiche Verpressgrad der Leitung 3 erreicht wird.

In einem solchen initialen Verpressvorgang wird der Steckverbinder 1 im Endbereich 2 der Leitung 3 und die Verpressvorrichtung 4 im Inneren 9 der Leitung 3 positioniert und ein Verpressvorgang wird durchgeführt. Dabei werden die auftretenden Kräfte am Pressabschnitt 13 der Spreizbacken 12, 12' der Verpressvorrichtung 4, an der Innenlage 15 des Aufnahmeabschnitts 6 des Steckverbinders 1 und/oder im Bereich der Verpressung 14 der Leitung 3 gemessen bzw. ermittelt und wahlweise wird auch der durch den initialen Verpressvorgang erreichte Verpressgrad vorzugsweise automatisiert festgestellt. Ebenso muss bei einem initialen Verpressvorgang, bei dem gleichzeitig ein Steckverbinder 1 und eine Leitung 3 verpresst werden, als zusätzlicher Parameter vorzugsweise die unverpresste Wandstärke 20 der Leitung 3 erfasst werden, sodass die auftretenden Kräfte am Pressabschnitt 13 der Spreizbacken 12, 12' in ihrer Komponenten in Bezug auf den Steckverbinder 1 und die Leitung 3 zerlegt werden können. Aus den so gewonnen Daten bzw. Informationen wird die für diese neue, unbekannte Chargenkonstellation vorzugebende Presskraft 19 ermittelt, für diese Chargenkonstellation hinterlegt und als Verpresskraft 19 für den unmittelbar folgenden Verpressvorgang vorgegeben.

Ist die in einem Verpressvorgang zu verarbeitende Chargenkonstellation bereits bekannt, so wird die dafür hinterlegte Verpresskraft 19 abgerufen und als Verpresskraft 19 für den unmittelbar folgenden Verpressvorgang vorgegeben.

Eine weitere mögliche Ausführungsform des Verfahrensschrittes 18 des Verpressverfahrens nach Fig. 2, in welchem Verfahrensschritt 18 die Verpresskraft 19 für den Verpressvorgang vorgegeben wird, ist in Fig. 4 in einem Ablaufdiagramm dargestellt. Der Verfahrensschritt 23 vor dem Verfahrensschritt 18, in welchem Verfahrensschritt 23 ein Steckverbinder 1 und eine Leitung 3 zur Verarbeitung bereitgestellt werden, entspricht dem Verfahrensschritt 23 in Fig. 2.

Nach dem Bereitstellen des Steckverbinders 1 und der Leitung 3 wird zu Beginn des Verfahrensschrittes 18 gemäß Fig. 4 jeweils ein Code aus elektromagnetisch abfragbaren Transpondern 24 - siehe Fig. 1, welche Transponder 24 (RFID-Tag) auf der Leitung 3 und auf dem Steckverbinder 1 angeordnet sind, automatisch ausgelesen und die jeweilige Chargennummer des Steckverbinders 1 und der Leitung 3 werden ermittelt.

In einem nächsten Schritt wird festgestellt, ob der aktuell verarbeitete Steckverbinder 1 und/oder die aktuell verarbeitete Leitung 3 aus einer als fehlerhaft markierten Charge stammt und in diesem Fall der Steckverbinder 1 und/oder die Leitung 3 ausgesondert werden muss. Ist eine solche Aussonderung nötig, so müssen anschließend der oder die ausgesonderten Teile wieder ersetzt werden und ebenso der oder die Transponder 24 des oder der neu bereitgestellten Teile wieder ausgelesen und die jeweilige Chargennummer ermittelt werden.

Stammen sowohl der Steckverbinder 1 als auch die Leitung 3 jeweils aus einer nicht fehlerhaft markierten Charge, so wird in einem nächsten Schritt überprüft, ob die aktuell vorliegende Chargenkonstellation dieselbe ist wie die im vorherigen Verpressvorgang. Ist dies der Fall so muss die derzeit vorgegebene Verpresskraft nicht angepasst werden und der Verfahrensschritt 18 ist an dieser Stelle abgeschlossen.

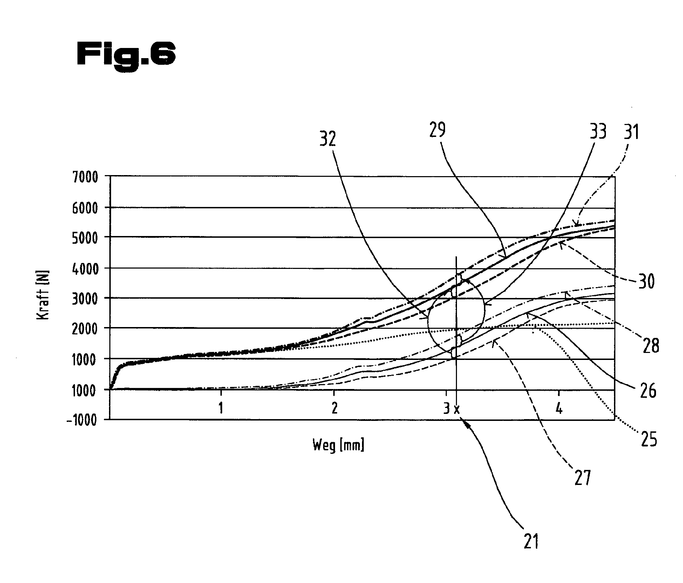

Handelt es sich um eine Chargenkonstellation, die im letzten Verpressvorgang nicht verarbeitet wurde, so wird in einem nächsten Schritt festgestellt, ob ein Steckverbinder 1 aus der vorliegenden Charge bereits verarbeitet wurde. Ist dies nicht der Fall, so wird die Verpresskraft 19 und ein entsprechender Korrekturwert 32, 33 - siehe auch Fig. 6 - für die Verpresskraft 19 für diese neue Charge von Steckverbindern 1 in einem initialen Verpressvorgang ermittelt, sodass möglichst der gleiche Verpressgrad der Leitung 3 erreicht wird. Der Korrekturwert 32, 33 der Verpresskraft 19 gibt an, um welchen Wert die Verpresskraft 19, insbesondere ausgehend von einer Normalverpresskraft, verändert werden muss, sodass für die aktuelle Charge von Steckverbindern 1 in jedem Verpressvorgang möglichst der gleiche Verpressgrad der Leitung 3 erreicht wird.

In einem nächsten Schritt wird festgestellt, ob die soeben ermittelte Verpresskraft 19 einen minimalen oder einen maximalen Wert unter- bzw. überschreitet und somit außerhalb eines gültigen Wertebereichs liegt. Ist dies der Fall, so wird die Charge, aus welcher der Steckverbinder 1 für den initialen Verpressvorgang stammt, als fehlerhaft markiert und der Steckverbinder 1 wird ausgesondert. Anschließend muss ein neuer Steckverbinder 1 für die Verarbeitung bereitgestellt werden.

Liegt die im initialen Verpressvorgang ermittelte Verpresskraft 19 innerhalb des gültigen Bereichs, so wird der für die Verpresskraft 19 ermittelte Korrekturwert 32, 33 für die neue Charge von Steckverbindern 1 hinterlegt und die Verpresskraft 19 wird mit dem ermittelten Korrekturwert 32, 33 angepasst.

Die Hinterlegung bzw. Speicherung insbesondere von Korrekturwerten 32, 33 oder Werten für die Verpresskraft 19 erfolgt insbesondere in einer nicht gezeigten Datenspeichervorrichtung einer Steuereinheit der Verpressvorrichtung 4.

Wurde bereits in einem vorhergehenden Verpressvorgang ein Steckverbinder 1 aus der nun vorliegenden Charge verarbeitet, so wird die Verpresskraft 19 mit dem für diese bereits bekannte Charge von Steckverbindern 1 hinterlegten Korrekturwert 32, 33 angepasst.

Im weiteren Verlauf des Verfahrensschrittes 18 nach Fig. 4 wird, wie bereits vorher für den Steckverbinder 1 beschrieben, ausgehend von der Frage, ob eine Leitung 3 aus der aktuell vorliegenden Charge bereits verarbeitet wurde, die Verpresskraft 19 mit dem entsprechenden Korrekturwert 32, 33 für die Leitung 3 angepasst, sodass möglichst der gleiche Verpressgrad der Leitung 3 erreicht wird.

Wurde eine Leitung 3 aus der aktuell vorliegenden Charge noch nicht verarbeitet, so wird die Verpresskraft 19 und der entsprechende Korrekturwert 32, 33 für die neue Charge von Leitungen 3 in einem initialen Verpressvorgang mit der Leitung 3 alleine ermittelt, und wenn die ermittelte Verpresskraft 19 außerhalb eines gültigen Bereichs liegt wird die aktuelle vorliegende Charge von Leitungen 3 als fehlerhaft markiert und die Leitung 3 wird ausgesondert. In den anderen Fällen wird entweder der in dem initialen Verpressvorgang gerade ermittelte Korrekturwert 32, 33 für die neue Leitungscharge hinterlegt und die Verpresskraft 19 mit dem ermittelten Korrekturwert 32, 33 angepasst oder die Verpresskraft 19 wird mit dem für die bereits bekannte Charge von Leitungen 3 hinterlegten Korrekturwert 32, 33 angepasst.

Die Ermittlung der entsprechenden Korrekturwerte 32, 33 für die Verpresskraft 19 in einem initialen Verpressvorgang nur mit einem Steckverbinder 1 alleine bzw. nur mit einer Leitung 3 alleine und die Anpassung der Verpresskraft 19 mit den daraus ermittelten Korrekturwerten 32, 33 wird zu einem späteren Zeitpunkt anhand Fig. 6 näher erläutert.

Fig. 5 zeigt eine dritte mögliche Ausführungsform des Verfahrensschrittes 18 des Verpressverfahrens nach Fig. 2, in welchem Verfahrensschritt 18 die Verpresskraft 19 für den Verpressvorgang vorgegeben wird.

Zu Beginn werden die Transponder 24 - Fig. 1 - auf dem Steckverbinder 1 und der Leitung 3 ausgelesen und die jeweiligen Chargennummern ermittelt. Weiters wird die aktuelle Chargenkonstellation ermittelt und nur bei einer gegenüber dem vorherigen Verpressvorgang geänderten Chargenkonstellation wird die Verpresskraft 19 mit den entsprechenden Korrekturwerten 32, 33 für die vorliegende Charge von Steckverbindern 1 und/oder die vorliegende Charge von Leitungen 3 angepasst.

Für den Fall dass der Korrekturwert 32, 33 für die vorliegende Charge von Steckverbindern 1 oder für die vorliegende Charge von Leitungen 3 noch nicht bekannt ist, da ein Steckverbinder 1 oder eine Leitung 3 aus einer solchen Charge noch nicht verarbeitet wurde, so wird die Verpresskraft 19 und der entsprechende Korrekturwert 32, 33 für die Verpresskraft 19 im Ausführungsbeispiel gemäß Fig. 5 aus Daten bzw. Informationen ermittelt, die von den Händlern bzw. Lieferanten der Steckverbinder 1 und/oder der Leitungen 3 bereitgestellt werden. Weiters wird der soeben ermittelte Korrekturwert 32, 33 hinterlegt und die Verpresskraft 19 wird damit angepasst.

Nach der Anpassung der Verpresskraft 19 aufgrund von Änderungen der Chargenkonstellation des Steckverbinders 1 und der Leitung 3 wird festgestellt, ob Veränderungen am Verarbeitungsprozess vorgenommen worden sind. Solche Veränderungen umfassen beispielsweise Wartungs- oder Instandsetzungsarbeiten an der Verpressvorrichtung 4. Wurde durch solche Arbeiten der Verarbeitungsprozess geändert, so wird die Verpresskraft 19 mit einem entsprechenden Korrekturwert 32, 33 zur Sicherstellung eines möglichst gleichbleibenden Verpressgrads angepasst.

In Fig. 6 sind beispielhafte Kraftverläufe 25 bis 28 an den Pressabschnitten 13 der Spreizbacken 12, 12' der Verpressvorrichtung 4 bei initialen Verpressvorgängen nur mit einem Steckverbinder 1 alleine oder nur mit einer Leitung 3 alleine grafisch dargestellt. Der Kraftverlauf 25 wurde für einen Steckverbinder 1 aus einer bestimmten Charge S1 gemessen. Die Kraftverläufe 26 bis 28 wurden für Leitungen 3 aus den Chargen L1 bis L3 ermittelt.

Die unterschiedlichen Kraftverläufe 26 bis 28 über dem Weg, welcher von den Spreizbacken 12, 12' der Verpressvorrichtung 4 zurückgelegt wurden, zeigen eine unterschiedliche Stabilität bzw. Festigkeit der Leitungen 3 aus den verschiedenen Chargen L1 bis L3 an. Wird nun der Kraftverlauf 25 für den Steckverbinder 1 aus der Charge S1 jeweils mit den Kraftverläufen 26 bis 28 der Leitungen 3 aus den Chargen L1 bis L3 addiert, so ergeben sich die Gesamtkraftverläufe 29 bis 31.

Um eine konstante Verpressdicke 21 - siehe auch Fig. 1 - und damit auch einen konstanten Verpressgrad zu erreichen, da im vorliegenden Fall die Wandstärken 20 der Leitungen 3 aus den einzelnen Chargen L1 bis L3 gleich sind, ist es nötig, die Verpresskraft 19 mit Korrekturwerten 32, 33 anzupassen.

Geht man von einer Leitung 3 aus der Charge L1 als der im vorhergehenden Verpressvorgang verarbeiteten Leitung 3 aus, so muss die zuvor vorgegebene Verpresskraft 19, welche sich aus dem Schnittpunkt der vertikalen Linie an der Stelle x (Verpressdicke 21) und dem Gesamtkraftverlauf 29 ergibt, um den Korrekturwert 32 reduziert werden. Dieser Korrekturwert 32 kann anhand des Unterschieds in den Kraftverläufen 26 und 27 an der Stelle der vertikalen Linie und somit anhand der in den initialen Verpressvorgängen mit Leitungen 3 aus der Charge L1 oder L2 allein gewonnenen Daten ermittelt werden.

In äquivalenter Weise kann der Korrekturwert 33 für Leitungen 3 aus der Charge L3 anhand des Unterschieds der Kraftverläufe 26 und 28 für die gemessenen Kräfte an der Stelle der vertikalen Linie ermittelt und die bei einer Verarbeitung einer Leitung 3 aus der Charge L3 vorzugebende Verpresskraft 19 mit dem Korrekturwert 33 entsprechend angepasst werden.

Besonders zweckmäßig ist es in diesem Zusammenhang, die Korrekturwerte 32, 33 bezogen auf eine Nennverpresskraft anzugeben.

Der Ordnung halber sei abschließend darauf hingewiesen, dass zum besseren Verständnis des Aufbaus des Steckverbinders, der Leitung und der Verpressvorrichtung diese bzw. deren Bestandteile teilweise unmaßstäblich und/oder vergrößert und/oder verkleinert dargestellt wurden.

Die Ausführungsbeispiele zeigen mögliche Ausführungsvarianten des Verfahrens zum Fixieren eines Steckverbinders, wobei an dieser Stelle bemerkt sei, dass die Erfindung nicht auf die speziell dargestellten Ausführungsvarianten desselben eingeschränkt ist.

**Bezugszeichenaufstellung**

| | | | |
|---|---|---|---|
| 1 | Steckverbinder | 31 | Gesamtkraftverlauf |
| 2 | Endbereich | 32 | Korrekturwert |
| 3 | Leitung | 33 | Korrekturwert |
| 4 | Verpressvorrichtung | | |
| 5 | Aufnahmehülse | | |
| | | | |
| 6 | Aufnahmeabschnitt | | |
| 7 | Mittelabschnitt | | |
| 8 | Spitzenabschnitt | | |
| 9 | Innere | | |
| 10 | Dichtungselement | | |
| | | | |
| 11 | Rastfeder | | |
| 12, 12' | Spreizbacke | | |
| 13 | Pressabschnitt | | |
| 14 | Verpressung | | |
| 15 | Innenlage | | |
| | | | |
| 16 | Teilbereich | | |
| 17 | Außenlage | | |
| 18 | Verfahrensschritt | | |
| 19 | Verpresskraft | | |
| 20 | Wandstärke | | |
| | | | |
| 21 | Verpressdicke | | |
| 22 | Strichcode | | |
| 23 | Verfahrensschritt | | |
| 24 | Transponder | | |
| 25 | Kraftverlauf | | |
| | | | |
| 26 | Kraftverlauf | | |
| 27 | Kraftverlauf | | |
| 28 | Kraftverlauf | | |
| 29 | Gesamtkraftverlauf | | |
| 30 | Gesamtkraftverlauf | | |

## Patentansprüche

1. Verfahren zum Fixieren eines Steckverbinders (1) in einem Endbereich (2) einer Leitung (3), insbesondere eines Rohres oder eines Schlauches, umfassend die Schritte: Positionieren des Steckverbinders (1) im Endbereich (2) der Leitung (3); Positionieren einer Verpressvorrichtung (4) im Inneren (9) des Steckverbinders (1); und Fixieren des Steckverbinders (1) im Endbereich (2) der Leitung (3) durch Ausführen eines Verpressvorgangs, wobei die Verpressvorrichtung (4) mit einer vorgegebenen Verpresskraft (19) von innen gegen den Steckverbinder (1) oder die Leitung (3) gepresst wird, sodass sich zumindest ein Teilbereich (16) der Leitung (3) und wahlweise auch des Steckverbinders (1) verformt und eine Verpressung (14) bildet, **dadurch gekennzeichnet, dass** vor dem Ausführen des Verpressvorgangs die Chargen, aus denen ein nun zu verpressender Steckverbinder (1) und eine nun zu verpressende Leitung (3) stammen, ermittelt werden und bei der Verarbeitung eines Steckverbinders (1) und/oder einer Leitung (3) aus einer anderen Charge als der zuvor verarbeiteten Charge ein Kraftverlauf (25) für das Verpressen des Steckverbinders (1) aus der vorherigen Charge mit einem Kraftverlauf für das Verpressen des Steckverbinders (1) aus der nun zu verpressenden, anderen Charge verglichen wird und/oder ein Kraftverlauf (26) für das Verpressen der Leitung (3) aus der vorherigen Charge mit einem Kraftverlauf (27, 28) für das Verpressen der Leitung (3) aus der nun zu verpressenden, anderen Charge verglichen wird und die zuvor vorgegebene Verpresskraft (19) mittels zumindest eines Korrekturwerts (32, 33) an die nun vorzugebende Verpresskraft (19) angepasst wird, wobei ein Korrekturwert aus einer Differenz in den Kraftverläufen (25) der Steckverbinder (1) aus den unterschiedlichen Chargen ermittelt wird und ein weiterer Korrekturwert (32, 33) aus einer Differenz in den Kraftverläufen (26, 27, 28) der Leitungen (3) aus den unterschiedlichen Chargen ermittelt wird.

2. Verfahren nach Anspruch 1, **dadurch gekennzeichnet, dass** bei der Verarbeitung eines Steckverbinders (1) und/oder einer Leitung (3) aus einer neuen Charge ein separater initialer Verpressvorgang nur für einen Steckverbinder (1) aus der neuen Charge alleine und/oder nur für eine Leitung (3) aus der neuen Charge alleine durchgeführt wird und dass aus den dabei gewonnenen Ergebnissen der Kraftverlauf (25) für den Steckverbinder (1) aus der neuen Charge und/oder der Kraftverlauf (26, 27, 28) für die Leitung (3) aus der neuen Charge ermittelt wird.

3. Verfahren nach Anspruch 2, **dadurch gekennzeichnet, dass** für die vorgegebene Verpresskraft (19) ein minimaler Wert und ein maximaler Wert festgelegt werden und eine Charge von Steckverbindern (1) und/oder eine Charge von Leitungen (3) ausgesondert wird, wenn die vorzugebende Verpresskraft (19), welche in zumindest einem initialen Verpressvorgang für diese Charge ermittelt wurde, außerhalb dieses Bereichs liegt.

4. Verfahren nach Anspruch 1, **dadurch gekennzeichnet, dass** bei der Verarbeitung eines Steckverbinders (1) und/oder einer Leitung (3) aus einer neuen Charge die für den festgelegten Verpressgrad vorzugebende Verpresskraft (19) aus einem Datensatz des Herstellers oder Lieferanten des Steckverbinders (1) und/oder der Leitung (3) ermittelt und für die jeweilige Charge von Steckverbindern (1) und/oder Leitungen (3) hinterlegt und verwendet wird.

5. Verfahren nach einem der vorhergehenden Ansprüche, **dadurch gekennzeichnet, dass** jeder Steckverbinder (1) und/oder jede Leitung (3) mit einem Code ausgestattet ist, anhand dessen vor dem Verpressen eine eindeutige Chargennummer des jeweiligen Steckverbinders (1) bzw. der jeweiligen Leitung (3) ermittelt wird und die vorgegebene Verpresskraft (19) entsprechend der gegebenen Chargenkonstellation und entsprechend dem festgelegten Verpressgrad angepasst wird.

6. Verfahren nach Anspruch 5, **dadurch gekennzeichnet, dass** der Code maschinenlesbar abgespeichert ist, insbesondere in Form eines optisch auswertbaren, ein- oder zweidimensionalen Strichcodes (22) oder eines elektromagnetisch abfragbaren Transponders (24), und dass die vorliegende Chargenkonstellation zur Anpassung der vorgegebenen Verpresskraft (19) automatisch ermittelt wird.

7. Verfahren nach einem der vorhergehenden Ansprüche, **dadurch gekennzeichnet, dass** die jeweilige vorgegebene Verpresskraft (19) in Form eines bestimmten konstanten Kraftwerts oder in Form eines Kraftverlaufs über der Zeit oder über dem Weg vorgegeben wird.

## Claims

1. Process for the fixing of a plug connector (1) into an end section (2) of a conduit (3), in particular of a pipe or a hose, comprising the steps: positioning the plug connector (1) in the end section (2) of the conduit (3); positioning a grouting device (4) in the inside (9) of the plug connector (1); and fixing the plug connector (1) in the end section (2) of the conduit (3) by performing a grouting process, with the grouting device (4) is pressed from the inside against the plug connector (1) or the conduit (3) with a predetermined grouting force (19), so that at least a portion (16) of the conduit (3) and optionally also of the plug connector (1) is deformed and forms a grouting (14), **characterized in that** prior to performing the grouting process, the loads, from which a plug connector (1) to be grouted and a conduit (3) to be grouted originate from, are determined and when a plug connector (1) and/or a conduit (3) from another load than the previously processed one is processed, a force characteristics (25) for grouting the plug connector (1) from the previous load is compared to a force characteristics for grouting the plug connector from another load to be grouted now, and/or a force characteristics (26) for grouting the conduit (3) from the previous load is compared to a force characteristics (27, 28) for grouting the conduit (3) from the other load to be grouted now, and the previously predetermined grouting force (19) is adapted to the grouting force (19) to be predetermined now by means of at least one correction value (32, 33), with a correction value being determined from a difference in the force characteristics (25) of the plug connectors (1) of different loads, and another correction value (32, 33) being determined from a difference in the force characteristics (26, 27, 28) of the conduits (3) of the different loads.

2. Process according to claim 1, **characterized in that** in processing a plug connector (1) and/or a conduit (3) from a new load, a separate, initial grouting process is performed for just one plug connector (1) from the new load alone and/or just for one conduit (3) from the new load alone, and that the force characteristics (25) for the plug connector (1) of the new load and/or the force characteristics (26, 27, 28) for the conduit (3) from the new load is determined on the basis of the results obtained therefrom.

3. Process according to claim 2, **characterized in that** a minimum value and a maximum value is defined for the predetermined grouting force (19), and a load of plug connectors (1) and/or a load of conduits (3) is sorted out, if the grouting force (19) to be predetermined, which was determined in at least one initial grouting process for this load, is beyond this range.

4. Process according to claim 1, **characterized in that** in processing a plug connector (1) and/or a conduit (3) from a new load, the grouting force (19) to be predetermined for the defined grouting level is determined from a dataset of the manufacturer or the supplier of the plug connector (1) and/or the conduit (3), and is stored and applied for the respective load of connectors (1) and/or conduits (3).

5. Process according to one of the preceding claims, **characterized in that** each connector (1) and/or each conduit (3) is provided with a code by means of which the definite load number of the respective connector (1) or of the respective conduit (3) is determined, and the predetermined grouting force (19) is adapted according to the given constellation of loads and according to the defined grouting level.

6. Process according to claim 5, **characterized in that** the code is saved in a machine-readable manner, in particular in form of an one or two dimensional barcode (22) that can be evaluated optically, or in form of a transponder (24) that can be scanned electromagnetically, and that the present constellation of loads is automatically determined for the adaption of the predetermined grouting force (19).

7. Process according to one of the preceding claims, **characterized in that** the respectively predetermined grouting force (19) is predetermined in the form of a certain constant force value or in the form of a force characteristic over the time or the path.

## Revendications

1. Procédé de fixation d'un connecteur à fiches (1) dans une extrémité (2) d'un conduit (3), en particulier d'un tube ou d'un tuyau, comprenant les étapes suivantes : positionnement du connecteur à fiches (1) dans l'extrémité (2) du conduit (3) ; positionnement d'un dispositif de pressage (4) à l'intérieur (9) du connecteur à fiches (1) ; et fixation du connecteur à fiches (1) dans l'extrémité (2) du conduit (3) par la réalisation d'une opération de pressage, étant entendu que le dispositif de pressage (4) est comprimé avec une force de pressage prédéfinie (19) contre le connecteur à fiches (1) ou le conduit (3) depuis l'intérieur de telle sorte qu'au moins une zone partielle (16) du conduit (3), et au choix, également du connecteur à fiches (1) se déforme et constitue un pressage (14), **caractérisé en ce qu'**avant la réalisation de l'opération de pressage, les lots desquels proviennent un connecteur à fiches (1) qui doit être comprimé et un conduit (3) qui doit être comprimé sont déterminés, et en cas de traitement d'un connecteur à fiches (1) et/ou d'un conduit (3) provenant d'un autre lot que le lot traité précédemment, un tracé de force (25) pour le pressage du connecteur à fiches (1) provenant du lot précédent est comparé avec un tracé de force pour le pressage du connecteur à fiches (1) provenant de l'autre lot qui doit être comprimé à ce moment et/ou un tracé de force (26) pour le pressage du conduit (3) provenant du lot précédent est comparé avec un tracé de force (27, 28) pour le pressage du conduit (3) provenant de l'autre lot qui doit être comprimé à ce moment et la force de pressage (19) prédéfinie auparavant est adaptée au moyen d'au moins une valeur de correction (32, 33) à la force de pressage (19) qui doit être prédéfinie à ce moment, étant entendu qu'une valeur de correction est déterminée à partir d'une différence dans les tracés de forces (25) des connecteurs à fiches (1) provenant des lots différents et une autre valeur de correction (32, 33) est déterminée à partir d'une différence dans les tracés de forces (26, 27, 28) des conduits (3) provenant des lots différents.

2. Procédé selon la revendication 1, **caractérisé en ce qu'**en cas de traitement d'un connecteur à fiches (1) et/ou d'un conduit (3) provenant d'un nouveau lot, une opération de pressage initiale distincte est réalisée uniquement pour un connecteur à fiches (1) provenant du nouveau lot seulement et/ou uniquement pour un conduit (3) provenant du nouveau lot seulement et **en ce qu'**à partir des résultats ainsi obtenus, le tracé de force (25) pour le connecteur à fiches (1) provenant du nouveau lot et/ou le tracé de force (26, 27, 28) pour le conduit (3) provenant du nouveau lot est déterminé.

3. Procédé selon la revendication 2, **caractérisé en ce que** pour la force de pressage prédéfinie (19), une valeur minimale et une valeur maximale sont fixées et un lot de connecteurs à fiches (1) et/ou un lot de conduits (3) est écarté lorsque la force de pressage (19) devant être prédéfinie, qui a été déterminée dans au moins une opération de pressage initiale pour ce lot, se situe en dehors de cet intervalle.

4. Procédé selon la revendication 1, **caractérisé en ce qu'**en cas de traitement d'un connecteur à fiches (1) et/ou d'un conduit (3) provenant d'un nouveau lot, la force de pressage (19) devant être prédéfinie pour le degré de pressage fixé est déterminée à partir de données du fabricant ou du fournisseur du connecteur à fiches (1) et/ou du conduit (3) et elle est enregistrée et utilisée pour le lot concerné de connecteurs à fiches (1) et/ou de conduits (3).

5. Procédé selon l'une des revendications précédentes, **caractérisé en ce que** chaque connecteur à fiches (1) et/ou chaque conduit (3) est pourvu d'un code à l'aide duquel un numéro de lot univoque du connecteur à fiches (1) concerné ou du conduit (3) concerné est déterminé avant le pressage et la force de pressage prédéfinie (19) est adaptée en fonction de la configuration donnée du lot et en fonction du degré de pressage fixé.

6. Procédé selon la revendication 5, **caractérisé en ce que** le code est enregistré de façon lisible par machine, en particulier sous la forme d'un code à barres (22) unidimensionnel ou bidimensionnel pouvant être analysé par voie optique ou d'un transpondeur (24) pouvant être consulté par voie électromagnétique, et **en ce que** la configuration existante du lot est déterminée automatiquement afin d'adapter la force de pressage prédéfinie (19).

7. Procédé selon l'une des revendications précédentes, **caractérisé en ce que** la force de pressage prédéfinie (19) respective est prédéfinie sous la forme d'une valeur de force constante déterminée ou sous la forme d'un tracé de force dans le temps ou dans l'espace.
